# EUROPEAN PATENT APPLICATION

(11) **EP 4 506 752 A1**
(43) Date of publication of application: **12.02.2025**
(21) Application number: 24156642.1
(22) Date of filing: 08.02.2024
(51) Int. Cl.: G03B 9/02, G02B 5/00, G03B 9/06

(54) **APERTURE STOP MECHANISM AND LENS MODULE**

(30) Priority: 09.08.2023 HK 32023077256
(71) Applicant: Chan, Yuk Sum, Hong Kong (HK)
(72) Inventor: Chan, Yuk Sum, Hong Kong (HK)
(74) Representative: Klunker IP Patentanwälte PartG mbB

(57) **Abstract**

An aperture stop mechanism is provided in the present disclosure. The aperture stop mechanism includes: a first aperture member with a circular-like light passage opening; a second aperture member with a polygonal light passage opening; and, a driver configured for adjusting a size of the circular-like light passage opening and a size of the polygonal light passage opening. The first aperture member and the second aperture member are arranged to overlap each other, such that the circular-like light passage opening and the polygonal light passage opening together define a single variable light passage opening into which light utilized in imaging is introduced. In this way, it is allowable for the user to choose between a desirable sunstar effect and a desirable bokeh effect by alternatively selecting the first aperture member with curved aperture blades or the second aperture member with straight aperture blades. Further, a lens module including the aperture stop mechanism is also provided in the present disclosure.

## Description

### FIELD

The present invention relates to an aperture stop mechanism and a lens module, and relates particularly to an aperture stop mechanism consisting of two aperture members with aperture blades of different shapes, which adjusts the shape and area of an aperture of a light passage opening into which light for imaging is introduced.

### DESCRIPTION OF THE RELATED ART

In the related art, there has been known an aperture stop mechanism which forms a light passage opening using movable curved or straight aperture blades that overlaps the lateral side of each other to adjust the aperture area of the light passage and further adjust the light amount for imaging (for example, see Patent Literature 1 or 2). Further, there has been known an aperture stop mechanism which forms multiple shapes of light passage openings for imaging that consists of two aperture blades that moves in only one axis (for example, see Patent Literature 3).

### Citation List

### Patent Literature

Patent Literature 1: US Patent Application Laid-Open No. US21470A
Patent Literature 2: WIPO Patent Application Laid-Open No. WO 2021/159967 A1
Patent Literature 3: European Patent Application Laid-Open No. EP2506072A1

### DISCLOSURE OF THE INVENTION

### TECHNICAL PROBLEM

In an aperture stop mechanism described in the Patent Literature 1, with curved aperture blades, the shape of the light passage is near a perfect circle at wider apertures. Therefore, at wider apertures, some of the large light-spots formed by out of focus objects in the formed image (bokeh) will appear to be a perfect circle. This is generally considered to be a favorable effect in portraiture photography. However, when a point light source is in focus in the formed image, a less regular diffraction spot (sunstar effect) is produced due to the curved aperture blades. Less regular sunstar effects are considered not ideal in photography.

In an aperture mechanism described in the Patent Literature 2, with straight aperture blades, the shape of the light passage is a regular n-sided polygon. Therefore, at wider apertures, some of the large light-spots formed by out of focus objects will appear to be in the shape of the n-sided polygon in the formed image. This is generally considered to be an unfavorable effect in photography. When the aperture is reduced to reduce the area of light passage, in focus point light sources will form a regular diffraction spot (desirable sunstar effect) with identical and sharp pointed tips. This effect is considered ideal.

In an aperture mechanism described in the Patent Literature 3, two aperture blades that moves in opposite directions are used in an aperture mechanism to allow users of the mechanism to have different shaped apertures. The shape of the aperture is a circle at the widest aperture. The shape of the aperture changes to an irregular symmetrical polygon at narrower apertures. However, this aperture mechanism cannot produce a constant shape when its size is adjusted. In narrower apertures, this mechanism produces highly irregular sunstar effects that are considered not ideal in photography. The rectangular shape of this aperture mechanism also limits its application in interchangeable lenses as most interchangeable lenses are cylindrical shaped.

### SOLUTION TO PROBLEM

In order to solve the above problem, an aperture stop mechanism in an embodiment of the present application includes two aperture members provided with an adjustable circular-like light passage opening and an adjustable polygonal light passage opening respectively. The first aperture member and the second aperture member are arranged to overlap each other, such that the circular-like light passage opening and the polygonal light passage opening together define a single variable light passage opening, into which light utilized in imaging is introduced. This design allows the user of a lens module to choose between a circular-like aperture (e.g., in case of larger apertures) and a regular polygonal aperture (e.g., in case of smaller apertures) by alternatively selecting the first aperture member with curved aperture blades or the second aperture member with straight aperture blades. Only the selected aperture member can be adjusted to a desirable aperture value determined by the user, while the other aperture member will remain at its widest aperture. As such, only the selected aperture member may contribute to aperture area and shape of the light passage opening (aperture) and therefore the effects of imaging as formed.

### EFFECT OF THE INVENTION

The present invention can provide an aperture stop mechanism which allows the user of a lens module to choose between a desirable sunstar effect (e.g., in case of smaller apertures) and a desirable bokeh effect (e.g., in case of larger apertures) in imaging.

### BRIEF DESCRIPTION OF THE DRAWINGS

FIG. 1 is a schematic view of a lens module including an aperture stop mechanism according to an embodiment of the present application;
FIG. 2(a) is a schematic front view of the first aperture member with a circular-like light passage opening at its widest aperture, and FIG. 2(b) is a schematic view of curved aperture blades in the first aperture member;
FIG. 3(a) is a schematic front view of the second aperture member with a polygonal light passage opening at its widest aperture, and FIG. 3(b) is a schematic view of straight aperture blades in the second aperture member;
FIGS. 4(a) and 4(b) are respectively a front view and a rear view of the aperture stop mechanism in an embodiment when the second aperture member is at its widest aperture;
FIGS. 5(a) and 5(b) are respectively a front view and a rear view of the aperture stop mechanism in an embodiment when the first aperture member is at its widest aperture;
FIGS. 6(a) and 6(b) are respectively a front view and a rear view of the aperture stop mechanism when the circular-like light passage opening is narrowed while the polygonal light passage opening is maintained at its widest aperture;
FIGS. 7(a) and 7(b) are respectively a front view and a rear view of the aperture stop mechanism when the polygonal light passage opening is narrowed while the circular-like light passage opening is maintained at its widest aperture;
FIG. 8 shows some schematic diagrams of a variety of diffracted spots formed by the light-rays passing through light passage openings of different shapes;
FIG. 9(a) is a schematic front view of the first aperture member at narrow apertures, and FIG. 9(b) shows a diagram of the diffracted spots formed by the first aperture member at narrow apertures;
FIG. 10 is a schematic view of a lens module including an aperture stop mechanism according to another embodiment of the present application;
FIG. 11 is a schematic view of a lens module according to a further embodiment of the present application;
FIG. 12 is a schematic view of a lens module according to a further embodiment of the present application;
FIG. 13 is a schematic view of a lens module according to a further embodiment of the present application.

### DESCRIPTION OF EMBODIMENTS

Hereinafter, embodiments of the present invention (hereinafter referred to as embodiments) will be described in detail with reference to the drawings.

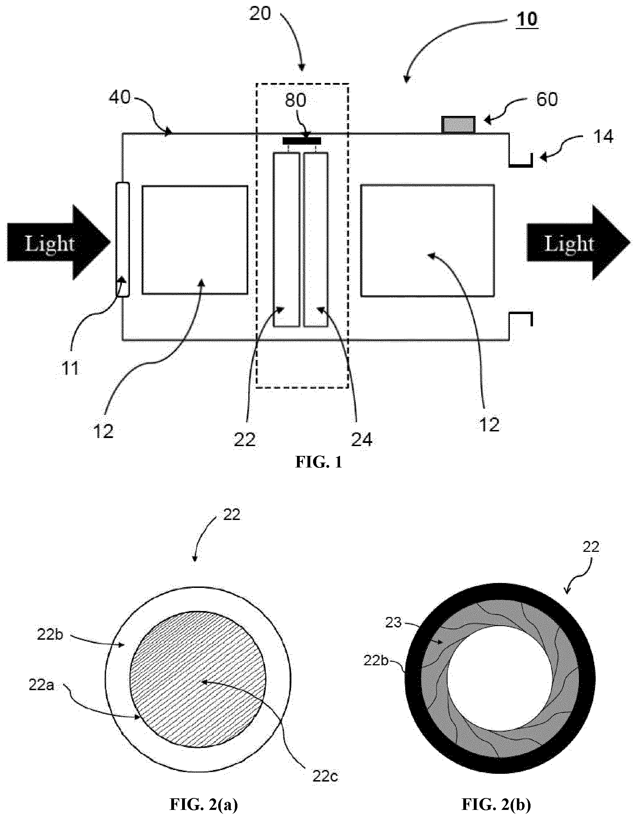

Referring to FIG. 1 which is a schematic view of a lens module including an aperture stop mechanism according to an embodiment of the present application, a lens module 10 is provided. The lens module 10 includes a lens barrel 40, a front lens 11, one or more lens elements 12, an aperture stop mechanism 20, a lens mount 14, and a mode switch 60. Some of these components are not essential for the lens module 10.

The lens barrel 40 is generally a cylindrical housing that defines an accommodation space therein. The front lens 11 is connected to a front end of the lens barrel 40, such that an ambient light outside the lens barrel 40 can enter the accommodation space through the front lens 11. In other embodiments, the front lens 11 may be omitted, and a portion of the lens barrel 40 at its front end is transparent enough to allow the ambient light to pass there-through. The lens elements 12 and the aperture stop mechanism 20 are disposed within the accommodation space along a central axis of the lens barrel 40. The lens mount 14 is located at a rear end of the lens barrel 40, and is configured to allow the lens module 10 to be connected to another electrical device, such as a camera. The lens mount 14 may be implemented in the form of screw, snap-fit, or interference-fit, etc., so as to facilitate connection of the lens module 10 to the electrical device. Further, there is a rear opening at the rear end of the lens barrel 40, which is surrounded by circumferential edges of the lens mount 14, such that the light entering the accommodation space defined by the lens barrel 40 can leave the lens module 10 through this rear opening.

As shown in FIG. 1, the aperture stop mechanism 20 is located within the lens barrel 40 between two lens elements 12. In this way, external light can sequentially pass through the front lens 11, one lens element 12 on the left side (also referred to as "the former lens element"), the aperture stop mechanism 20, and another lens element 12 on the right side (also referred to as "the latter lens element"), and then leave the lens module 10 through the rear opening. Thereafter, the light may be incident on an optical sensor of an electrical device connected with the lens mount 14, and finally form an image thereon. The aperture stop mechanism 20 is configured to provide a light passage opening there-through, and to adjust an aperture area of the light passage so as to adjust the light amount for imaging. More specifically, the light amount received by the latter lens element 12 can be adjusted by the aperture stop mechanism 20. The mode switch 60 is provided on an outer surface of the lens barrel 40, and is electrically connected to the aperture stop mechanism 20, so as to enable the user of the lens module 10 to choose a specific operation mode for the aperture stop mechanism 20. In other embodiments, the mode switch 60 may be omitted, and thereby the user may manually operate the aperture stop mechanism 20 to select an operation mode thereof.

The aperture stop mechanism 20 includes a first aperture member 22 with a circular-like light passage opening and a second aperture member 24 with a polygonal light passage opening. In the embodiment shown in FIG. 1, the first aperture member 22 is closer to the front lens 11 than the second aperture member 22. Further, the aperture stop mechanism 20 includes a driver 80. The driver 80 is electrically connected to each of the first and second aperture members, and is configured for adjusting a size of the circular-like light passage opening in the first aperture member 22, and a size of the polygonal light passage opening in the second aperture member 24. The first aperture member 22 and the second aperture member 24 are arranged to overlap each other, such that the circular-like light passage opening and the polygonal light passage opening can together define a single variable light passage opening into which the light utilized in imaging is introduced. As such, the light passing through the former lens element 12 may be blocked by the first aperture member 22 at first, and then blocked by the second aperture member 24. The amount of light incident on the latter lens element 12 may be adjusted by the first aperture member 22 and/or the second aperture member 24.

Referring to FIG. 2(a) which is a schematic front view of the first aperture member at its widest aperture, and FIG. 2(b) which is a schematic view of curved aperture blades in the first aperture member, the first aperture member 22 includes a plurality of curved aperture blades 23. Each of the curved aperture blades 23 includes a curved edge portion 22a, and all the edge portions 22a of the plurality of curved aperture blades 23 together define a circular-like light passage opening 22c. That is to say, an outer circumference of the circular-like light passage opening 22c is delimited by a plurality of curved edge portions 22a. In an example, the first aperture member 22 comprises k curved aperture blades which together define the circular-like light passage opening, wherein k is larger than or equal to 9; smaller than or equal to 13, i.e., 9 ≦ k≦ 13. Particularly, FIG. 2(b) illustrates the first aperture member 22 consisting of eleven curved aperture blades 23 which together define the circular-like light passage opening 22c, wherein each blade has a curved edge portion adjacent to the light passage opening. The light passage opening 22c is generally not of a perfect circular shape, and some angled corners may exist between two adjacent edge portions 22a, especially in narrower apertures (e.g. when F-value < f/4). In this case, a virtual circle inscribing the shape defined by the edge portions 22a of the curved aperture blades 23 may be regarded as representative of the circular-like light passage opening 22c. Further, the first aperture member 22 may include a mechanical part 22b, which is able to move the curved aperture blades 23 or the edge portions 22a thereof, such that an aperture area of the circular-like light passage opening 22c is adjustable.

The driver 80 shown in FIG. 1 is electrically connected to the first aperture member 22, e.g., to the mechanical part 22b thereof, and is configured to drive the plurality of curved aperture blades 23 so as to adjust an aperture area of the circular-like light passage opening 22c. In this application, the mechanical part 22b of the first aperture member 22 may also be considered as a part of the driver 80. The specific configuration of the curved aperture blades 23 and the driving way thereof are well known in the art, and thus are not described in detail herein.

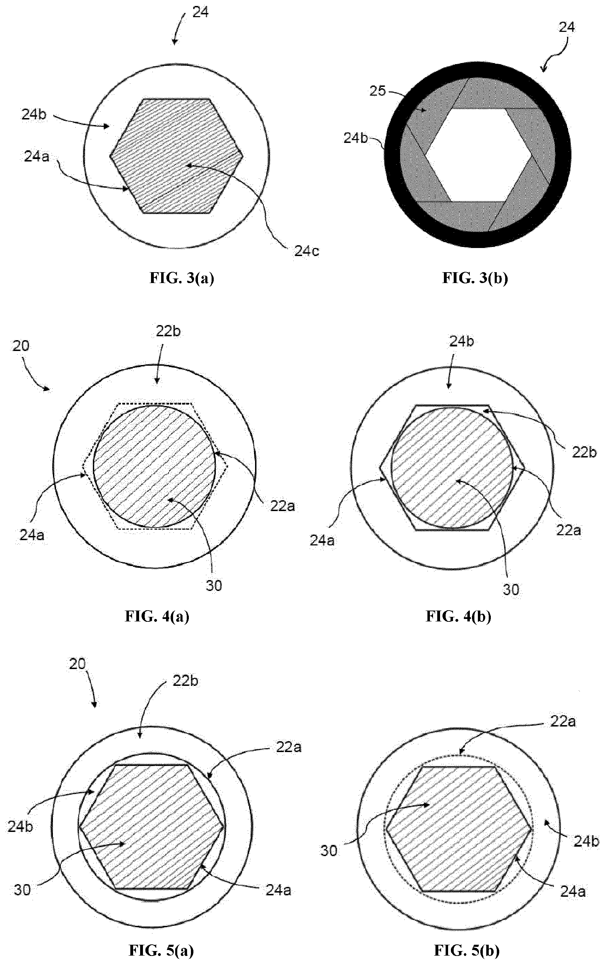

Similarly, as shown in FIG. 3(a) that is a schematic front view of the second aperture member at its widest aperture, and FIG. 3(b) that is a schematic view of straight aperture blades in the second aperture member, the second aperture member 24 includes a plurality of straight aperture blades 25. Each of the straight aperture blades 25 includes a straight edge portion 24a, and all the edge portions 24a of the plurality of straight aperture blades 25 together define a polygonal light passage opening 24c. That is, an outer circumference of the polygonal light passage opening 24c is delimited by a plurality of straight edge portions 24a. The second aperture member 24 further includes a mechanical part 24b, which is able to move the straight aperture blades 25 or the edge portions 24a thereof, such that an aperture area of the polygonal light passage opening 24c is adjustable.

As shown in FIG. 1, the driver 80 is electrically connected to the second aperture member 24, e.g. to the mechanical part 24b thereof, and is specifically configured to drive the plurality of straight aperture blades 25 so as to adjust an aperture area of the polygonal light passage opening 24c. In this application, the mechanical part 24b of the second aperture member 24 may be considered as a part of the driver 80, as well. The specific configuration of the straight aperture blades 25 and the driving way thereof are well known in the art, and therefore are not described in detail herein.

In an embodiment, the polygonal light passage opening 24c is of a regular n-sided polygonal shape. The number n may be equal to 6, 7, 8, 10 or 12. Particularly, FIG. 3(b) illustrates the second aperture member 24 consisting of six straight aperture blades 25 which together define the polygonal light passage opening 24c, wherein each blade has a straight edge portion adjacent to the light passage opening. The number of the straight aperture blades 25 may be equal to n, which means that each of the straight aperture blade 25 has a straight edge portion 24a constituting one edge of the regular n-sided polygon. In an embodiment, the number n may be an even number, such that the polygonal light passage opening 24c is in the shape of a hexagon, octagon, decagon, etc.

FIGS. 4(a) and 4(b) are respectively a front view and a rear view of the aperture stop mechanism in an embodiment when the second aperture member is at its widest aperture. As shown, the circular-like light passage opening of the first aperture member 22 and the polygonal light passage opening of the second aperture member 24 are concentric with each other. That is to say, a virtual circle circumscribing or inscribing the polygonal light passage opening 24c is concentric with the circular-like light passage opening 22c. In this embodiment, when the second aperture member 24 is at its widest aperture, the polygonal light passage opening 24c is opened to its widest possible aperture allowed by its physical design. Meanwhile, the circular-like light passage opening 22c is opened to an optimized position to arrive at its widest possible aperture. In this position, a diameter of the virtual circle inscribing the regular polygon delimited by edge portions of the straight aperture blades 25 is not smaller than a diameter of the virtual circle inscribing the shape delimited by the edge portions of the curved aperture blades 23. In particular, the two virtual circles may have the same diameter, that is, a diameter of the circular-like light passage opening 22c in its widest possible aperture is equal to that of an inscribed circle of the polygonal light passage opening 24c in its widest possible aperture.

Since the first aperture member 22 is located in front of the second aperture member 24 (as shown in FIG. 1), a part of the polygonal light passage opening 24c and all of the edge portions 24a of the second aperture member 24 will be blocked by the first aperture member 22, when viewed from the front side of the aperture stop mechanism, as indicated by broken lines shown in FIG. 4(a). On the other hand, both the circular-like light passage opening 22c and the polygonal light passage opening 24c are visible from the rear side of the aperture stop mechanism, as indicated in FIG. 4(b). The first aperture member 22 overlaps with the second aperture member 24 to form an actual light passage opening 30, that is, a single variable light passage opening into which the light utilized in imaging is introduced. The actual light passage opening 30 in this embodiment is the circular-like light passage opening 22c of the first aperture member 22. As such, the final light passage opening will be of a circular-like shape; F-value (e.g. f/2) of the aperture stop mechanism 10 at this position will be equal to F-value (e.g. f/2) of the first aperture member 22 with a circular-like light passage opening 22c, while F-value (e.g. f/1.8) of the second aperture member 24 with a polygonal light passage opening 24c shall not be considered.

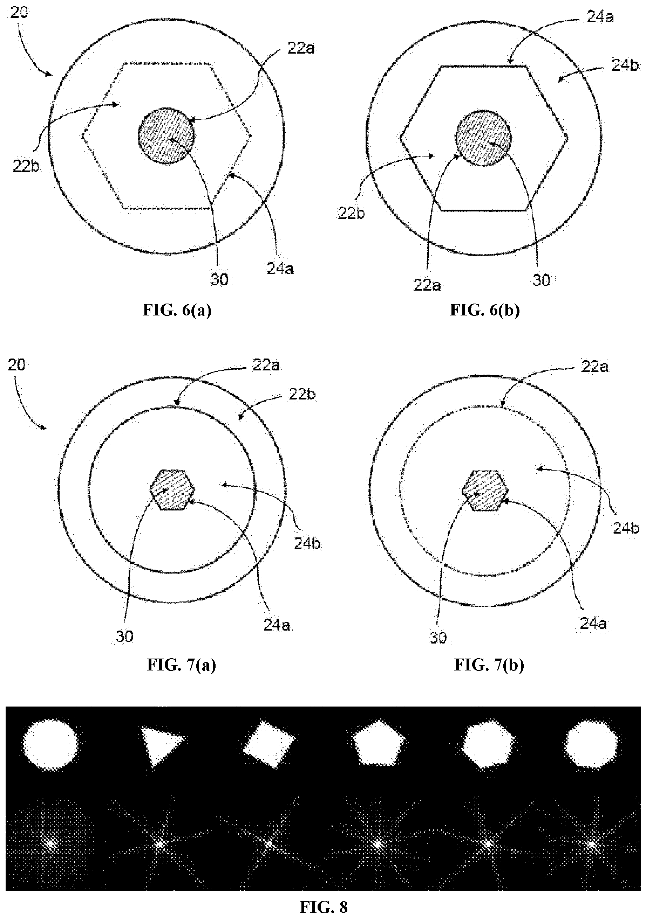

On this basis, FIGS. 6(a) and 6(b) are respectively a front view and a rear view of the aperture stop mechanism when the circular-like light passage opening is narrowed while the polygonal light passage opening is maintained at its widest aperture. As shown, while the circular-like light passage opening 22c is gradually narrowed, the actual light passage opening 30 is likewise gradually narrowed; accordingly, the amount of light incident on the latter lens element 12 is reduced. When the actual light passage opening 30 is large enough as not to introduce diffraction spots (sun stars) in the formed image, some of the out-of-focus objects in the formed image will appear to be in the same shape as the actual light passage opening 30, i.e., a circular-like shape in this embodiment.

FIGS. 5(a) and 5(b) are respectively a front view and a rear view of the aperture stop mechanism in an embodiment when the first aperture member is at its widest aperture. As shown, the circular-like light passage opening 22c of the first aperture member 22 and the polygonal light passage opening 24c of the second aperture member 24 are concentric with each other. In this embodiment, the first aperture member 22 is at its widest aperture, which means the circular-like light passage opening 22c thereof is opened to its widest possible aperture allowed by its physical design. Meanwhile, the polygonal light passage opening 24c is opened to an optimized position to arrive at its widest possible aperture. In this position, a diameter of the virtual circle circumscribing the regular polygon delimited by the edge portions of the straight aperture blades 25 does not exceed that of the virtual circle inscribing the shape delimited by the edge portions of the curved aperture blades 23. Particularly, the two virtual circles may have the same diameter, that is, a diameter of the circular-like light passage opening 22c in its widest possible aperture equals to a diameter of a circumscribed circle of the polygonal light passage opening 24c in its widest optimized aperture.

Since the first aperture member 22 is located in front of the second aperture member 24 (shown in FIG. 1), the circular-like light passage opening 22c and the polygonal light passage opening 24c are both visible from the front side of the aperture stop mechanism, as indicated in FIG. 5(a). On the other hand, a part of the circular-like light passage opening 22c and all the edge portions 22a of the first aperture member 22 will be blocked by the second aperture member 24, when viewed from the rear side of the aperture stop mechanism, as indicated by broken lines shown in FIG. 5(b). The first aperture member 22 overlaps with the second aperture member 24 to form an actual light passage opening 30, that is, a single variable light passage opening into which the light utilized in imaging is introduced, which is the polygonal light passage opening 24c in this embodiment. As a result, the final light passage opening is of a polygonal shape; F-value (e.g. f/2) of the aperture stop mechanism 10 at this position will be equal to F-value (e.g. f/2) of the second aperture member 24 with a polygonal light passage opening 24c, while F-value (e.g. f/1.8) of the first aperture member 22 with a circular-like light passage opening 22c shall not be considered.

On this basis, FIGS. 7(a) and 7(b) are respectively a front view and a rear view of the aperture stop mechanism when the polygonal light passage opening is narrowed while the circular-like light passage opening is maintained at its widest aperture. As shown, while the polygonal light passage opening 24c is gradually narrowed, the actual light passage opening 30 is likewise gradually narrowed; accordingly, the amount of light incident on the latter lens element 12 is reduced.

Referring to FIG. 8, some schematic diagrams of a variety of diffracted spots (sun stars) formed by the light-rays passing through light passage openings of different shapes are illustrated. Along the left-to-right direction in FIG. 8, the shapes of the light passage openings listed in the first row are, in order, a circle, a triangle, a quadrilateral, a pentagon, a hexagon, and an octagon. The second row in FIG. 8 shows the simulation results of angular spectral diffraction calculations for the respective light spots corresponding to the six shapes in the first row. As shown in the simulation results of angular spectral diffraction calculations corresponding to a circular aperture, the shape of a diffracted light spot is roughly circular. However, in camera lenses with a curved aperture blade design, the shape of the aperture area is circular-like in larger apertures but may be shaped like a n-sided polygon with slightly curved sides in smaller apertures.

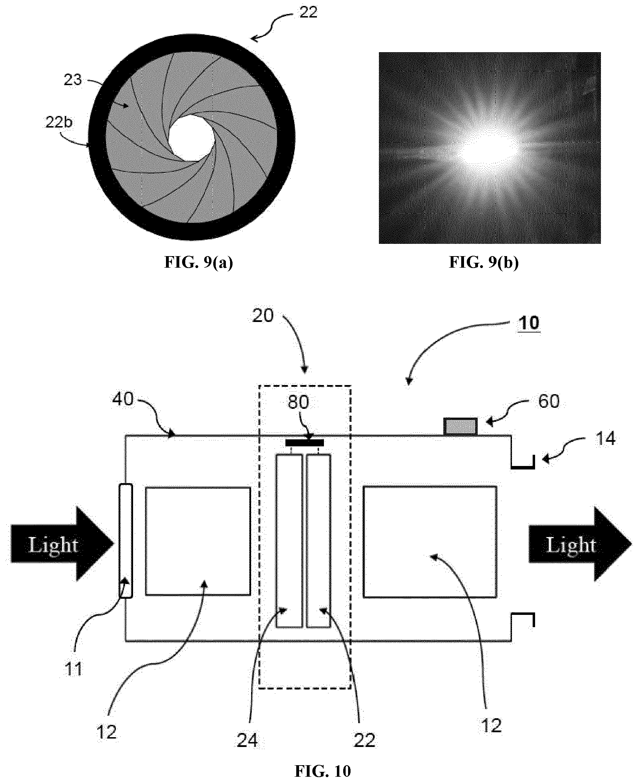

Further, FIG. 9(a) shows the first aperture member with a circular-like light passage opening at its narrow apertures, forming a polygonal-like light passage opening with slightly curved edges on all sides, and FIG. 9(b) shows a diagram of the diffracted spots formed by the first aperture member at narrow apertures. The central opening shown in FIG. 9(a) is similar to a regular polygon, but instead has all edges slightly inwardly curved. That is, each edge of the light passage opening protrudes slightly toward the center thereof. FIG. 9(b) is a real paragraph formed by using the first aperture member 22 in FIG. 9(a) when its F-value is small enough. As in the simulated effect, the pointed tips of diffraction spots formed by a circular-like aperture member at its narrow apertures are less sharp and thin. That is, when the sides of the light passage opening is slightly curved, the sunstar effect will have fatter and blunted pointed tips, which is less favourable as compared to the diffraction spots (i.e., sun stars) formed by a regular polygonal aperture.

Therefore, a second aperture member 24 with straight aperture blades 25 is introduced to avoid the less favourable diffraction spots formed by the first aperture member 22 with curved aperture blades 23 in narrower apertures.

Referring again to FIG. 1, a mode switch 60 is provided on an outer surface of the lens barrel 40, and is electrically connected to the aperture stop mechanism 20, e.g., the driver 80 thereof, so as to enable the user of the lens module 10 to select a specific mode for the aperture stop mechanism 20 while adjusting an aperture area thereof. The mode switch 60 can be considered as a controller of the aperture stop mechanism 20 according to the present application.

Specifically, the mode switch 60 involves three operation modes, that is, a circular-like mode, a polygonal mode and an auto mode, and is configured to enable the aperture stop mechanism 20 to be operated in any of such operation modes. In an embodiment, the mode switch 60 may be implemented as a three-stage toggle switch which is able to slide or rotate on an outer surface of the lens barrel 40. The first stage of the toggle switch may be designated as "CIR" corresponding to the circular-like mode, the second stage may be designated as "POL" corresponding to the polygonal mode, and the third stage may be designated as "AUTO" corresponding to the auto mode. The user may simply move the toggle switch to a specific position indicated by CIR, POL or AUTO, so as to enable the aperture stop mechanism 20 to be operated in any of the aforementioned modes.

Specifically, in the circular-like mode, the polygonal light passage opening 24c of the second aperture member 24 is maintained in its widest possible aperture, and only the circular-like light passage opening 22c of the first aperture member 22 is adjustable. The first aperture member 22 with the circular-like light passage opening 22c is selected for any aperture value (also referred to as "F-value") of the whole aperture stop mechanism 20. In the polygonal mode, the circular-like light passage opening 22c of the first aperture member 22 is maintained in its widest possible aperture, and only the polygonal light passage opening 24c of the second aperture member 24 is adjustable. That is, the second aperture member 24 with the polygonal light passage opening 24c is selected for any F-value of the whole aperture stop mechanism 20. Furthermore, in the auto mode, both the circular-like light passage opening 22c of the first aperture member 22 and the polygonal light passage opening 24c of the second aperture member 24 are adjustable.

In the auto mode, the circular-like light passage opening 22c can be selected in wider apertures to obtain a desirable bokeh effect in the formed image, while the polygonal light passage opening 24c can be selected in narrower apertures to obtain a desirable sunstar effect in the formed image. The definition of wider apertures and narrower apertures can be customized by the user, e.g., in the user menu, or alternatively by the manufacturer in default. For instance, a preset value can be provided by the user or the lens manufacturer or the camera manufacturer for distinguishing between the wider apertures and narrower apertures. In this case, the first aperture member 22 is adjustable when an aperture value of the aperture stop mechanism is greater than the preset value, while the second aperture member 24 is adjustable when the aperture value is smaller than the preset value. In an embodiment, the preset value is set to be f/4, such that only the circular-like light passage opening 22c is adjustable when the aperture value of the aperture stop mechanism 20 is larger than f/4, and only the polygonal light passage opening 24c is adjustable when the aperture value of the aperture stop mechanism 20 is smaller than or equal to f/4. It will be understood that the boundary value between wider apertures and narrower apertures need not be limited to be f/4, but also may adopt other values.

Referring to FIGS. 4(a) to 7(b), in the auto mode of the the aperture stop mechanism 20, both the first aperture member 22 and the second aperture member 24 may remain at their widest possible apertures in the beginning. As the aperture value of the aperture stop mechanism 20 decreases gradually to the preset value, circular-like light passage opening 22c of the first aperture member 22 is narrowed. When the aperture value reaches the preset value, adjustment to the first aperture member 22 is ceased, and adjustment to the second aperture member 24 is now possible. Thereafter, as the aperture value of the aperture stop mechanism 20 continuously decrease to be smaller than the preset value, the polygonal light passage opening 24c of the second aperture member 24 is also narrowed synchronously.

By allowing the aperture stop mechanism 20 according to the present application to be operated in any of the circular-like mode, the polygonal mode and the auto mode as mentioned above, it will be convenient and efficient for the user to choose a desirable operation mode for the aperture stop mechanism 20.

Referring to FIG. 10 which is a schematic view of a lens module including an aperture stop mechanism according to another embodiment of the present application, the second aperture member 24 in the aperture stop mechanism 20 may be arranged in front of the first aperture member 22 within the lens barrel 40. That is, the first aperture member 22 is further away from the front lens 11 than the second aperture member 22, or, is closer to the lens mount 14 than the second aperture member 22. Accordingly, a front view of the aperture stop mechanism 20 at its widest aperture will be similar to FIG. 4(b), while a rear view of the aperture stop mechanism 20 at this position will be similar to FIG. 4(a).

In the embodiments shown in FIG. 1 and FIG. 10, the aperture stop mechanism 20 is located between two lens elements 12 within the lens barrel 40. However, the location of the aperture stop mechanism 20 is not limited, and other arrangements may be adopted.

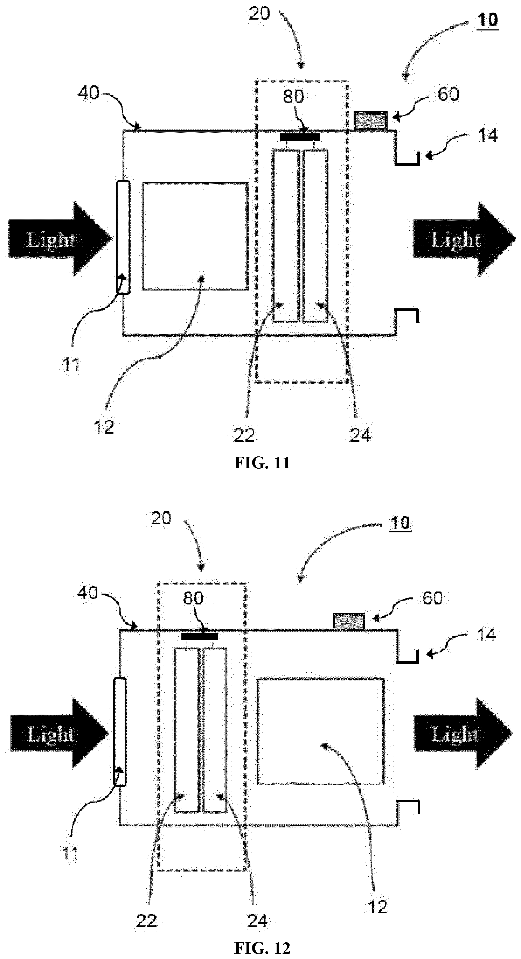

As shown in FIG. 11, which is a schematic view of a lens module according to a further embodiment of the present application, the lens element 12 is located on one side of the aperture stop mechanism 20 away from the lens mount 14. There is no lens element 12 on one side of the aperture stop mechanism 20 away from the front lens element 11. In this case, the ambient light will pass through the front lens element 11, the lens element 12, and the aperture stop mechanism 20 in order, and then directly leave the lens module 10 to be incident on an optical sensor of another electrical device. Thereby, the aperture stop mechanism 20 is used to control the amount of light exiting the lens element 12.

As shown in FIG. 12, which is a schematic view of a lens module according to a further embodiment of the present application, the lens element 12 is located between the aperture stop mechanism 20 and the lens mount 14. There is no lens element 12 on one side of the aperture stop mechanism 20 facing the front lens element 11. In this case, the ambient light will pass through the front lens element 11, the aperture stop mechanism 20, and the lens element 12 in order, and then directly leave the lens module 10 to be incident on an optical sensor of another electrical device. Therefore, the aperture stop mechanism 20 is used to control the amount of light exiting the front lens element 11 to be received by the lens element 12.

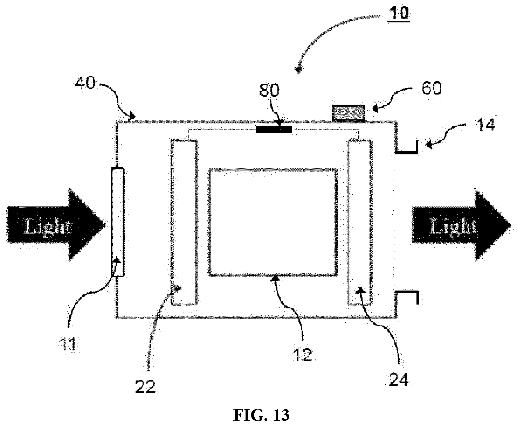

As shown in FIG. 13, which is a schematic view of a lens module according to a further embodiment of the present application, the lens element 12 is located between the first aperture member 22 and the second aperture member 24 in the aperture stop mechanism 20. In this case, the ambient light will pass through the front lens element 11, the first aperture member 22, the lens element 12, and the second aperture member 24 in order, and then directly leave the lens module 10 to be incident on an optical sensor of another electrical device. Therefore, the first aperture member 22 is used to control the amount of light exiting the front lens element 11 to be received by the lens element 12, while the second aperture member 24 is used to control the amount of light exiting the lens element 12.

In the embodiments shown in FIG. 1 and FIGS. 10-13, the lens module 10 includes a lens mount 14 enabling the lens module 10 to be connected to a camera. The lens mount 14 is located at a rear end of the lens barrel 40, so as to facilitate connection of the lens module 10 to the camera.

### DESCRIPTION OF REFERENCE NUMERALS

10 lens module, 11 front lens element, 12 lens element(s), 14 lens mount, 20 aperture stop mechanism, 22 first aperture member, 23 curved aperture blade, 22a edge portion of curved aperture blades, 22b mechanical part of the first aperture member, 22c circular-like light passage opening, 24 second aperture member, 25 straight aperture blade, 24a edge portion of straight aperture blades, 24b mechanical part of the second aperture member, 24c polygonal light passage opening, 30 actual light passage opening, 40 lens barrel, 60 mode switch, 70 controller, 80 driver

### INDUSTRIAL APPLICABILITY

The present invention is available for an aperture stop mechanism, and available particularly for an aperture mechanism which consists of an aperture member with curved aperture blades and an aperture member with straight aperture blades, which adjusts the aperture shape and area of a light passage opening of a lens module into which light for imaging is introduced.

## Claims

1. An aperture stop mechanism, comprising:
a first aperture member with a circular-like light passage opening;
a second aperture member with a polygonal light passage opening; and
a driver configured for adjusting a size of the circular-like light passage opening and a size of the polygonal light passage opening,
wherein the first aperture member and the second aperture member are arranged to overlap each other, such that the circular-like light passage opening and the polygonal light passage opening together define a single variable light passage opening into which light utilized in imaging is introduced.

2. The aperture stop mechanism according to claim 1, wherein the first aperture member comprises k curved aperture blades which together define the circular-like light passage opening, wherein 9 ≦ k '- 13; the driver is configured to drive the plurality of curved aperture blades so as to adjust an aperture area of the circular-like light passage opening.

3. The aperture stop mechanism according to claim 1, wherein the second aperture member comprises a plurality of straight aperture blades which together define the polygonal light passage opening; the driver is configured to drive the plurality of straight aperture blades so as to adjust an aperture area of the polygonal light passage opening.

4. The aperture stop mechanism according to claim 3, wherein the polygonal light passage opening is of a regular n-sided polygonal shape, wherein n equals to 6, 7, 8, 10 or 12.

5. The aperture stop mechanism according to claim 1, wherein the circular-like light passage opening and the polygonal light passage opening are concentric with each other.

6. The aperture stop mechanism according to any of claim 1 to 5, further comprising a controller which is electrically connected with the driver and enables the aperture stop mechanism to be operated in any of the following modes:
a circular-like mode where the polygonal light passage opening of the second aperture member in maintained its widest possible aperture, and only the circular-like light passage opening of the first aperture member is adjustable;
a polygonal mode where the circular-like light passage opening of the first aperture member is maintained in its widest possible aperture, and only the polygonal light passage opening of the second aperture member is adjustable; and
an auto mode where both the circular-like light passage opening of the first aperture member and the polygonal light passage opening of the second aperture member are adjustable.

7. The aperture stop mechanism according to claim 6, wherein in the auto mode, the first aperture member is adjustable when an aperture value of the aperture stop mechanism is greater than a preset value, while the second aperture member is adjustable when the aperture value is smaller than the preset value.

8. A lens module, comprising:
the aperture stop mechanism according to any of claims 1 to 7; and
a lens element.
